# EUROPEAN PATENT APPLICATION

(11) **EP 0 744 745 A1**
(43) Date of publication of application: **27.11.1996**
(21) Application number: 96102734.9
(22) Date of filing: 23.02.1996
(51) Int. Cl.: G11B 33/04

(54) **CD rack**

(30) Priority: 24.02.1995 DK 68/95 U
(71) Applicant: DANACCESS ApS, 8600 Silkeborg (DK)
(72) Inventor: Flemming Lykke Sorensen, DK-8250 Egaa (DK)
(74) Representative: Nielsen, Leif

(57) **Abstract**

The invention relates to a rack (1) for compact disks (CDs). The rack is provided with devices for holding cassettes (2) for CDs. These devices hold the CD cassettes (2) in such a manner that it is possible to hold the cassettes in both a closed state and an open state. In a preferred embodiment, the rack is provided with a slide (13) and a slide bar (26). The slide (13) is slidable back and forth in the slide bar (26). In a first inserted position of the slide (13), it is only possible to store the CD cassettes (2) in a closed state. In a second exposed position, it is also possible to store the CD cassettes (2) in an open state. In this manner it is not necessary to take the CD cassettes out of the rack when one wants to take a CD out of the cassette or put it back into the cassette.

## Description

The present invention relates to a rack for cassettes for compact disks (CDs), said rack comprising a stand extending from a bottom in upward direction to a top, said stand being provided, between the bottom and the top, with at least one device designed for holding CD cassettes in a closed state.

CD racks of the above-mentioned type are known. These CD racks have a slot or other holding device for the cassette of the CD. When the CD is to be played, the cassette is taken out of the rack. It is a disadvantage that while the CD is being played, the CD cassette will often lie loosely outside the rack and will not be returned back into the rack until the CD has been played. If several CD cassettes have been removed from the rack at the same time, it may be difficult to find the right CD cassette for the right CD.

Thus, it is the object of the present invention to provide a CD rack that makes it possible to hold the CD cassette in the rack both in a closed state, e.g. when the CD is not being played, and also in an open state when the CD is to be taken out of the CD cassette in order to be played, however not possessing the disadvantages discussed above.

This object is obtained with a CD rack characterised in that said device is also designed for holding the CDs in an open state.

A rack with these characteristics makes it possible to hold the CD cassette both in a closed state and in an open state and ensures that the CD cassette will not lie loosely outside the CD rack while the CD is being played. The CD cassette may constantly be retained in the rack both in a closed state when the CD is stored and in an open state when the CD is taken out of the cassette in order to be played.

In a preferred embodiment, the rack is characterised in that the device comprises a slide bar and a slide, that the slide bar is fastened to the stand, and that the slide is slidably mounted in the slide bar.

In this embodiment, the CD cassette is held in the slide. In a first position, in which the CD is being stored, the slide is in an inserted position. In a second position, in which the CD is to be taken out of the CD cassette, the slide is in an exposed position. In the inserted position it is possible to store several CD cassettes on top of each other.

In the first position of a preferred embodiment it is not possible to open the CD cassette since other slide bars, slides and CD cassettes are located on top impeding the opening of the CD cassette. In the second position of the preferred embodiment the slide with the CD cassette is projected relative to the other CD cassettes so that it is possible to open the CD cassette without the CD cassettes on top impeding the opening.

In a preferred embodiment, the slide is characterised in that the slide is provided with a first collar and a second collar, that the first collar is arranged in a projected position on the slide as compared to the second collar, that the first collar and the second collar each comprise a first part projecting in substantially perpendicular direction from the slide and a second part projecting from the first part in substantially perpendicular relation to the first part, that the second part on the first collar extends towards the second collar, and that the second part on the second collar extends towards the first collar.

By using collars such as discussed above for holding the CD cassettes in the slide, it is possible in a simple manner to insert, remove or replace the CD cassettes in the slide. The slide is pulled forward into the second and exposed position. The CD cassette is moved sideward relative to the forward movement of the slide whereby a CD cassette may be inserted into or removed from the slide.

### DESCRIPTION OF THE DRAWING

The invention will now be described in detail with reference to the accompanying drawing, in which
- figure 1: is a side view of an embodiment of a rack according to the invention;
- figure 2: is a view, seen from a position in front of the rack, of a stand of the rack according to the invention shown in figure 1;
- figure 3: is a view, seen from a position behind the rack, of the stand shown in figure 2;
- figure 4: is a view from a position from the rack top of a slide bar of the holder according to the invention shown in figure 1;
- figure 5: is a view from a position from the side, respectively the rear, of the rack of a slide for co-operation with the slide bar shown in figure 4;
- figure 6: is a view from a position from the top, alternatively the bottom, of the rack of a locking block for co-operation with the slide bar shown in figure 4;
- figure 7: is a view of the cooperation between the slide bar shown in figure 4, the slide shown in figure 5, and the locking block shown in figure 6.

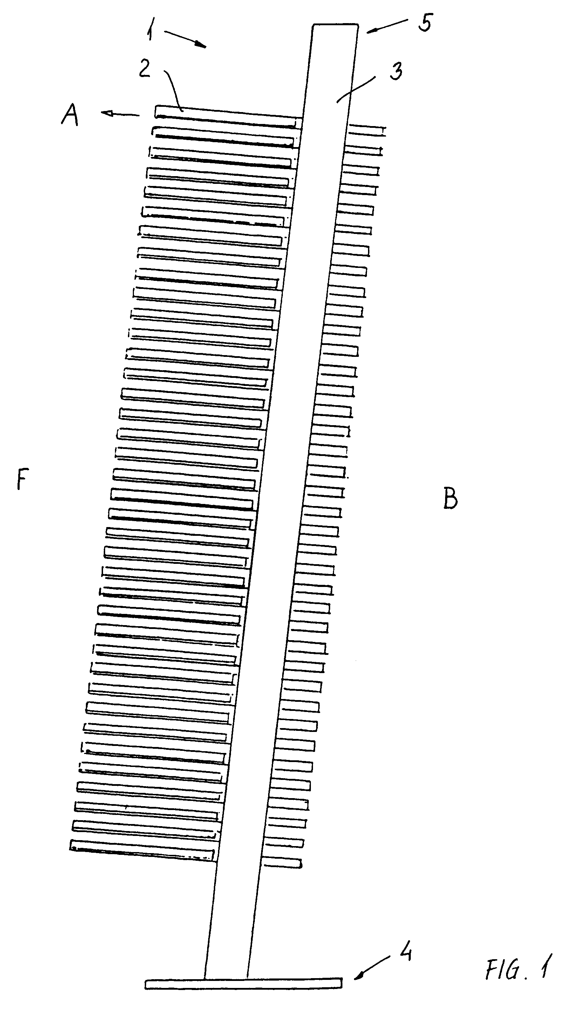

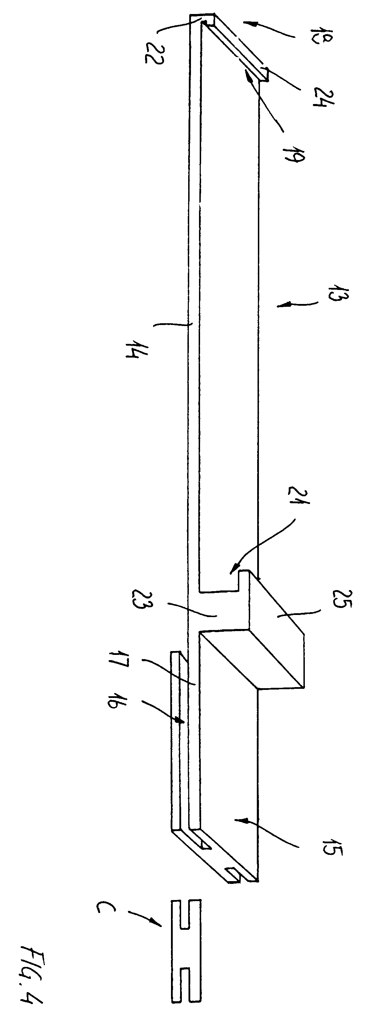

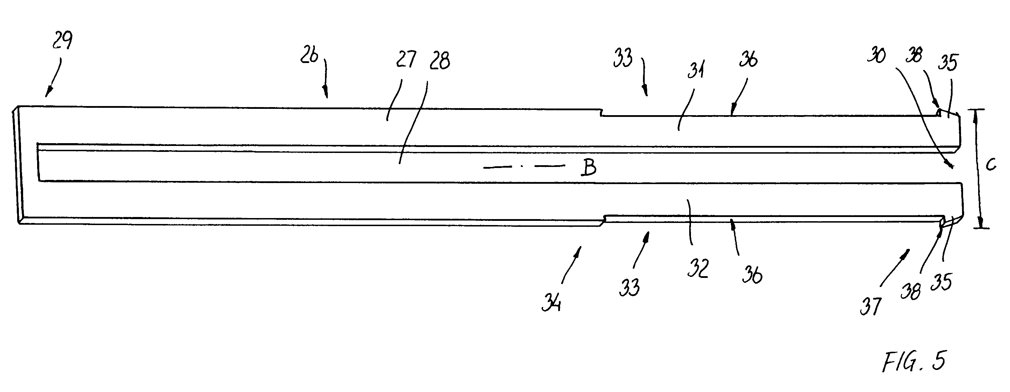

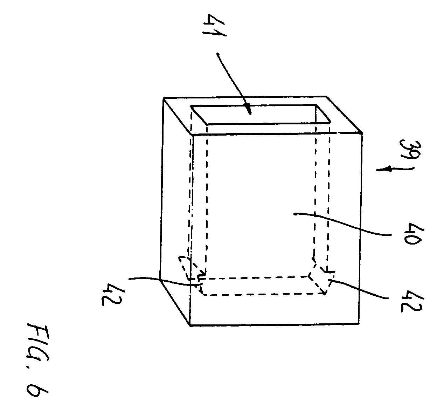

Figure 1 illustrates an embodiment of a rack 1 according to the invention. The rack 1 is designed for storing several CD cassettes 2. The rack comprises a stand 3. The stand 3 comprises a foot 4 and a top 5. The CD cassettes 2 are arranged between the foot 4 and the top 5. The CD cassettes 2 are arranged in slides (see figure 5) that are able to slide forward in a direction illustrated by the arrow A. A user will be in front of the rack 1 in a position F when using the rack. A position B indicates a position behind the rack 1. The slides are mounted in slide bars (see figure 4) fastened to the stand by means of locking blocks (see figure 6). The topmost CD cassette may be in a closed state as shown or in an open state (not shown). The other CD cassettes must be slid forward in order to be able to be in an open state.

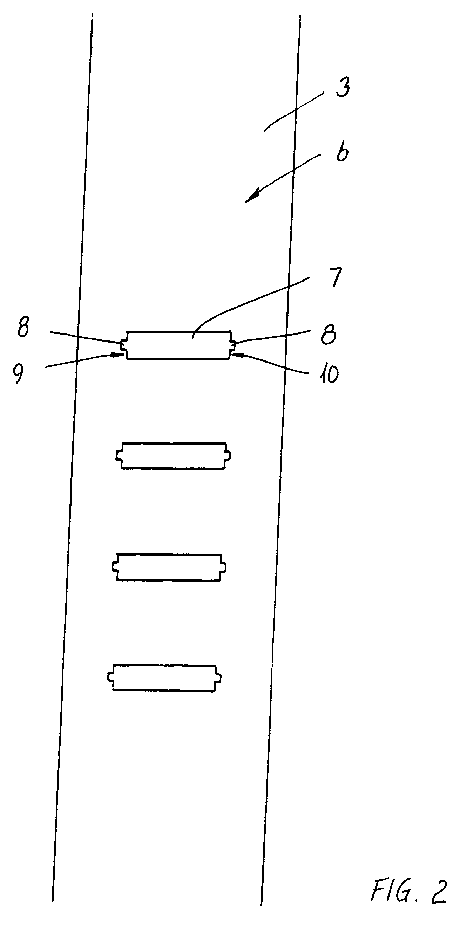

Figure 2 illustrates the stand 3 from the position F in front of the rack 1. The stand 3 comprises a front wall 6 with apertures 7 having a rectangular cross-section except from recesses 8 on opposite sides 9, 10 of the apertures 7. The slide bars (see figure 5) and the slides (see figure 4) are designed to be slid into the apertures 7.

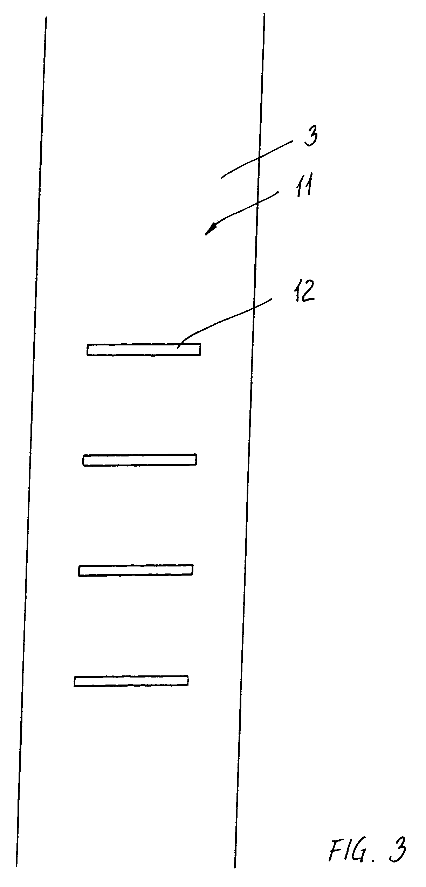

Figure 3 illustrates the stand 3 from position B behind the rack 1. The stand 3 here comprises a rear wall 11 with apertures 12 having a rectangular cross-section. The slide bars (see figure 5) are designed to be slid into the apertures 12. In an alternative embodiment, the rack 1 is provided with a plate element extending along the stand provided with the apertures shown and forming a rear wall of the stand.

Figure 4 illustrates a slide 13 of the rack 1. The slide 13 is designed to hold a CD cassette 2. The slide comprises a longitudinal member 14. In its rear end 15, the slide 13 is provided with a substantially dovetail profile 16, which, together with the longitudinal member 14, forms an I-shaped cross-section C. The I-shaped cross-section C is designed to co-operate with a first track in the slide bar (see figure 5). Recesses 17 in the I-shaped cross-section C are designed to engage the slide bar (see figure 5).

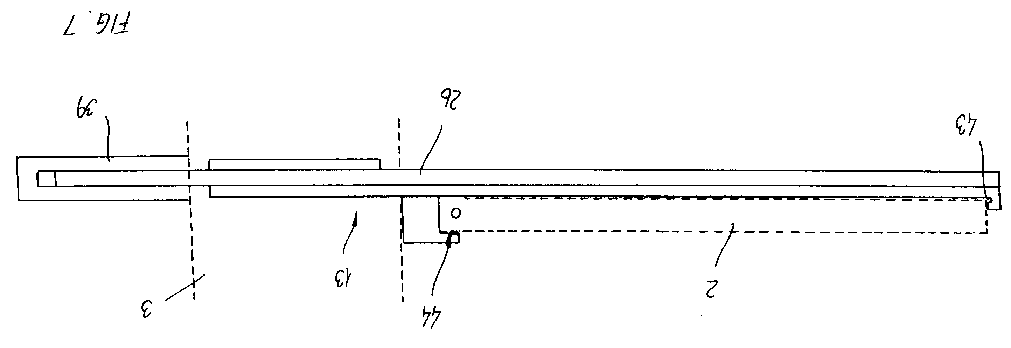

In its front end 18, the longitudinal member 14 is provided with a first collar 19. In a central part 20, the longitudinal member 14 is provided with a second collar 21. Each collar consists of a first part 22, respectively 23, extending in substantially perpendicular direction from the longitudinal member, and a second part 24, respectively 25, extending in substantially perpendicular direction relative to the first part 22, 23. The first collar 19 is designed to cooperate with a grip-edge on a CD cassette (see figure 7). The second collar 21 is designed to co-operate with a reference edge on a CD cassette (see figure 7).

Figure 5 illustrates a slide bar 26 of the rack 1. The slide bar 26 is designed to receive the dovetail profile 16 with the I-shaped cross-section C comprised by the slide 13 (see figure 4). The slide bar 26 comprises a longitudinal member 27 with a first track 28 extending from a front end 29 of the slide bar 26 to an aperture 30 for the track 28 between a first rim 31 and a second rim 32 along a longitudinal axis B. Thus, the profile 16 with the I-shaped cross-section C on the slide 13 (see figure 4) is designed to be inserted into the track 28 from the other end 30.

The longitudinal member 27 is also provided with second tracks 33 extending from a central part 34 of the longitudinal member to flaps 35 in the rear part of the longitudinal member. Between outmost edges 36 of the second tracks 33 there is a distance b. In its rear end 37, the longitudinal member 27 is provided with the flaps 35. The flaps extend outward relative to the longitudinal axis B. A distance c between extreme ends 38 of the flaps 35 is wider than the distance b. The flaps 35 are designed to engage recesses in a locking block (see figure 6).

Figure 6 illustrates a locking block 39 of the rack 1. The locking block 39 is designed to co-operate with the rear end 37 of the slide bar 26 (see figure 5). The locking block 39 is designed with an aperture 40 having an opening 41. The aperture 40 is designed with recesses 42. Having been inserted through the apertures 7, 12 of the stand 3, the rear end 37 of the slide bar 26 is designed to be introduced into the aperture 40 through the opening 41 into a position in which the flaps 35 of the slide bar 26 will engage the recesses 42 in the aperture 40.

Figure 7 illustrates how the slide 13, the slide bar 26 and the locking block 39 co-operate with each other and how these three parts co-operate with the stand 3. The slide 13 with the profile 16 with the I-shaped cross-section C has been slid into the first track 28 of the slide bar 26. The slide bar 26 has subsequently been slid through the apertures 7, 13 in the front wall 6, respectively the rear wall 11, of the stand so that the front end 29 is located in the position F in front of the stand 3 and the rear end 37 is located in the position B behind the stand. The rear end 37 of the slide bar 26 has been slid into the aperture 40 of the locking block 39, and the flaps 35 are engaging the recesses 42 in the hollow 40 of the locking block 39.

A CD cassette 2 is placed in the slide 13, a grip-edge 43 of the CD cassette 2 engaging a first collar 19 and a reference edge 44 of the CD cassette engaging a second collar 21. The slide 13 is in an inserted position, and by grasping the slide it may be pulled forward into an exposed position. By a forward pull into the exposed position, the profile 16 with the I-shaped cross-section C will be slid forward in the first track 28 of the slide bar 26.

The invention has been described above with reference to a specific and preferred embodiment of a CD rack according to the invention. However, the functioning and the individual parts of the rack may be provided in different ways.

## Claims

1. A rack (1) for compact disk (CD) cassettes, said rack (1) comprising a stand (3) extending from a bottom (4) in upward direction to a top (5), said stand (3) being provided, between the bottom (4) and the top (5), with at least one device designed to hold a CD cassette in a closed state, **characterised** in that said device is also designed for holding a CD cassette in an open state.

2. A rack according to claim 1, **characterised** in that in a first position said device is designed to hold the CD cassette in a closed state, and that in a second position the device is designed to hold the CD cassette in an open state.

3. A rack according to claim 1 or 2, **characterised** in that said device comprises a slide bar (26) and a slide (13), that the slide bar (26) is fastened to the stand (3), and that the slide (13) is slidably mounted in the slide bar (26).

4. A rack according to claim 3, **characterised** in that the slide (13) is provided with a first collar (19) and a second collar (21), that the first collar (19) is arranged in a projected position on the slide (13) as compared to the second collar (21), that the first collar (19) and the second collar (21) each comprise a first part (22, 23) projecting in substantially perpendicular direction from the slide (13) and a second part (24, 25) projecting from the first part (22, 23) in substantially perpendicular relation to the first part (22, 23), that the second part (24) on the first collar (19) extends towards the second collar (21), and that the second part (25) on the second collar (21) extends towards the first collar (19).

5. A rack according to claim 3 or claim 4, **characterised** in that the slide bar (26) consists of a longitudinal member (27) and is provided with a longitudinal track (28) extending between longitudinal rims (31, 32), that the slide (13) consists of a longitudinal member (14), which comprises a profile (16) having an I-shaped cross-section (C), and that the profile (16) extends in the longitudinal track (28) of the slide bar (26).

6. A rack according to any one of claims 3 to 5, **characterised** in that the slide bar (26) consists of a longitudinal member (27), that the longitudinal member (27) has a width (b) and is provided with flaps (35) projecting from a longitudinal axis (B) at a distance (c) between extreme ends (38) of the flaps (35) that is wider than (b), that the longitudinal member (27) is designed to extend from a front (6) of the stand (3) to a rear side (11) of the stand (3) through apertures (7, 12) in the stand (3) and further into an aperture (40) in a locking block (39) arranged on the rear side (11) of the stand (3), and that the flaps (35) are in contact with recesses (42) in the aperture (40) of the locking block (39).

7. A rack according to any one of the preceding claims, **characterised** in that the rack (1) comprises between 10 and 50 devices for holding CD cassettes, preferably 34.

8. A rack according to any one of the preceding claims, **characterised** in that the devices for holding the CD cassettes form an angle of more than 90° towards a horizontal plane, preferably 96°.

9. A rack according to any one of the preceding claims, **characterised** in that the rack is produced from plastic.

10. The use of a rack according to any of the preceding claims for storing CD cassettes.
